# EUROPEAN PATENT APPLICATION

(11) **EP 3 958 604 A1**
(43) Date of publication of application: **23.02.2022**
(21) Application number: 20801754.1
(22) Date of filing: 06.05.2020
(51) Int. Cl.: H04W 24/02

(54) **COMMUNICATION METHOD AND APPARATUS**

(30) Priority: 08.05.2019 CN 201910380807
(71) Applicant: Huawei Technologies Co., Ltd., Longgang Shenzhen, Guangdong 518129 (CN)
(72) Inventor: ZHENG, Lili, Shenzhen, Guangdong 518129 (CN); ZHANG, Hongping, Shenzhen, Guangdong 518129 (CN); ZENG, Qinghai, Shenzhen, Guangdong 518129 (CN)
(74) Representative: Epping - Hermann - Fischer
(86) International application number: PCT/CN2020/088675
(87) International publication number: WO 2020/224575

(57) **Abstract**

This application provides a communication method and apparatus. The communication method includes: receiving measurement configuration information from a network device; determining whether a measurement task requires a measurement gap; and if the measurement task does not require the measurement gap, sending first measurement gap requirement information indicating that the measurement gap is not required to the network device, where the first measurement gap requirement information is used to deactivate or release configured measurement gap configuration information; and/or if the measurement task requires the measurement gap, sending second measurement gap requirement information indicating that the measurement gap is required to the network device, where the second measurement gap requirement information is used to activate or validate measurement gap configuration information corresponding to the second measurement gap requirement information. A measurement gap configuration status is determined based on measurement gap requirement information reported by a terminal device. Therefore, flexibility of configuring the measurement gap can be improved, unnecessary communication interruption can be avoided, and a network side does not need to reconfigure or release the measurement gap configuration through an RRC message, so that signaling overheads can be reduced.

## Description

This application claims priority to Chinese Patent Application No. 201910380807.5, filed with the China National Intellectual Property Administration on May 8, 2019 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

When a terminal device in a connected state performs measurement, the terminal device may need to perform radio frequency (radio frequency, RF) switching to measure a target reference signal. Consequently, the terminal device cannot simultaneously maintain communication with a serving cell and measure the target reference signal. In view of this problem, a measurement gap (measurement gap) mechanism is proposed, and the serving cell configures a measurement gap for the terminal device. During the measurement gap, data sending and receiving between the terminal device and the serving cell are not required, and the terminal device may measure the target reference signal.

Currently, in a new radio (new radio, NR) system, except for some special scenarios (for example, in which "a to-be-measured SSB is in an active BWP (active BWP)", "intra-frequency measurement is performed when an active BWP is an initial BWP (initial BWP)", or "UE supports a per-FR gap and a to-be-measured frequency and a serving frequency are not in a same FR"), a network side configures the measurement gap for the terminal device, making flexibility of configuring the measurement gap relatively poor.

### SUMMARY

This application provides a communication method and apparatus, to effectively improve flexibility of configuring a measurement gap.

According to a first aspect, a communication method is provided. The communication method includes: receiving measurement configuration information from a network device, where the measurement configuration information indicates a measurement task; determining whether the measurement task requires a measurement gap; and if the measurement task does not require the measurement gap, sending first measurement gap requirement information indicating that the measurement gap is not required to the network device, where the first measurement gap requirement information is used to deactivate or release configured measurement gap configuration information; and/or if the measurement task requires the measurement gap, sending second measurement gap requirement information indicating that the measurement gap is required to the network device, where the second measurement gap requirement information is used to activate or validate measurement gap configuration information corresponding to the second measurement gap requirement information.

In this application, a measurement gap configuration status is determined based on measurement gap requirement information reported by a terminal device. In this way, on the one hand, flexibility of configuring the measurement gap can be improved, and on the other hand, unnecessary communication interruption between the terminal device and a serving cell can be avoided, thereby improving communication efficiency. In addition, the measurement gap requirement information reported by the terminal device is directly used to activate or validate, or deactivate or release measurement gap configuration information, so that the network device does not need to reconfigure or release the measurement gap through radio resource control (radio resource control, RRC) signaling. In this way, signaling overheads can be reduced.

With reference to the first aspect, in a possible implementation of the first aspect, the measurement configuration information includes first measurement gap configuration information; and if the measurement task does not require the measurement gap, the first measurement gap requirement information is sent to the network device, where the first measurement gap requirement information is used to deactivate or release the first measurement gap configuration information; and/or if the measurement task requires the measurement gap, the second measurement gap requirement information is sent to the network device, where the second measurement gap requirement information is used to activate or validate the first measurement gap configuration information.

With reference to the first aspect, in a possible implementation of the first aspect, the first measurement gap configuration information is validated by default; and if the measurement task does not require the measurement gap, the first measurement gap requirement information is sent to the network device, where the first measurement gap requirement information is used to deactivate or release the first measurement gap configuration information; or if the measurement task requires the measurement gap, measurement gap requirement information is not sent to the network device.

It should be understood that, in this implementation, the terminal device needs to send the measurement gap requirement information to the network device only when the measurement gap is not required, to deactivate or release the configured measurement gap configuration information. The terminal device does not need to send the measurement gap requirement information when the measurement gap is required. In this way, signaling overheads can be further reduced.

With reference to the first aspect, in a possible implementation of the first aspect, the first measurement gap configuration information is not validated by default; and if the measurement task requires the measurement gap, the second measurement gap requirement information is sent to the network device, where the second measurement gap requirement information is used to activate or validate the first measurement gap configuration information; or if the measurement task does not require the measurement gap, measurement gap requirement information is not sent to the network device.

It should be understood that, in this implementation, the terminal device needs to send the measurement gap requirement information to the network device only when the measurement gap is required, to activate or validate the required measurement gap configuration information. The terminal device does not need to send the measurement gap requirement information when the measurement gap is not required. In this way, signaling overheads can be further reduced.

With reference to the first aspect, in a possible implementation of the first aspect, if the measurement task requires the measurement gap, the second measurement gap requirement information is sent to the network device, where the second measurement gap requirement information includes a measurement gap parameter, and the second measurement gap requirement information is used to validate the measurement gap configuration information corresponding to the measurement gap parameter.

This implementation is applicable to a scenario in which the measurement configuration information does not include the measurement gap configuration information, or is applicable to a scenario in which the configured measurement gap configuration information does not meet a measurement requirement of the measurement task.

With reference to the first aspect, in a possible implementation of the first aspect, the determining whether the measurement task requires a measurement gap includes: when a serving cell configuration changes, determining whether the measurement task requires the measurement gap.

A change of the serving cell configuration includes any one or more of the following: serving cell addition (SCell addition), serving cell removal (SCell removal), and serving cell configuration modification.

It should be understood that, a requirement of the measurement task for the measurement gap may change when the serving cell configuration changes. Therefore, when the serving cell configuration changes, the terminal device determines whether the measurement task requires the measurement gap, and may report the measurement gap requirement information to the network device based on a determining result, so that it can be effectively ensured that the measurement configuration information meets the measurement requirement.

According to a second aspect, a communication method is provided. The communication method includes: sending measurement configuration information to a terminal device, where the measurement configuration information indicates a measurement task; and when the measurement task does not require a measurement gap, receiving, from the terminal device, first measurement gap requirement information indicating that the measurement gap is not required, where the first measurement gap requirement information is used to deactivate or release configured measurement gap configuration information; and/or when the measurement task requires a measurement gap, receiving, from the terminal device, second measurement gap requirement information indicating that the measurement gap is required, where the second measurement gap requirement information is used to activate or validate measurement gap configuration information corresponding to the second measurement gap requirement information.

In this application, a measurement gap configuration status is determined based on measurement gap requirement information reported by the terminal device. In this way, on the one hand, flexibility of configuring the measurement gap can be improved, and on the other hand, unnecessary communication interruption between the terminal device and a serving cell can be avoided, thereby improving communication efficiency. In addition, the measurement gap requirement information reported by the terminal device is directly used to activate or validate, or deactivate or release the measurement gap configuration information, so that a network device does not need to reconfigure or release the measurement gap through RRC signaling. In this way, signaling overheads can be reduced.

With reference to the second aspect, in a possible implementation of the second aspect, the measurement configuration information includes first measurement gap configuration information; and when the measurement task does not require the measurement gap, the first measurement gap requirement information is received from the terminal device, where the first measurement gap requirement information is used to deactivate or release the first measurement gap configuration information; and/or when the measurement task requires the measurement gap, the second measurement gap requirement information is received from the terminal device, where the second measurement gap requirement information is used to activate or validate the first measurement gap configuration information.

With reference to the second aspect, in a possible implementation of the second aspect, the first measurement gap configuration information is validated by default; and when the measurement task does not require the measurement gap, the first measurement gap requirement information is received from the terminal device, where the first measurement gap requirement information is used to deactivate or release the first measurement gap configuration information; or when the measurement task requires the measurement gap, measurement gap requirement information is not received from the terminal device.

With reference to the second aspect, in a possible implementation of the second aspect, the first measurement gap configuration information is not validated by default; and when the measurement task requires the measurement gap, the second measurement gap requirement information is received from the terminal device, where the second measurement gap requirement information is used to activate or validate the first measurement gap configuration information; or when the measurement task does not require the measurement gap, measurement gap requirement information is not received from the terminal device.

With reference to the second aspect, in a possible implementation of the second aspect, the second measurement gap requirement information is received from the terminal device, where the second measurement gap requirement information includes a measurement gap parameter, and the second measurement gap requirement information is used to validate the measurement gap configuration information corresponding to the measurement gap parameter.

According to a third aspect, a communication method is provided. The communication method includes: sending measurement configuration information to a terminal device, where the measurement configuration information carries measurement gap configuration information; and sending a medium access control-control element (medium access control-control element, MAC-CE) to the terminal device, where the MAC-CE indicates to deactivate configured measurement gap configuration information, or the MAC-CE indicates to activate configured measurement gap configuration information.

In this application, a network device deactivates or activates the measurement gap configuration information by using the MAC-CE. Compared with using RRC signaling, a transmission delay can be reduced.

With reference to the third aspect, in a possible implementation of the third aspect, the method further includes: receiving measurement gap requirement information from the terminal device, where the measurement gap requirement information indicates that a measurement gap is required or not required.

The sending a MAC-CE to the terminal device includes: when the measurement gap requirement information indicates that the measurement gap is not required, sending, to the terminal device, a MAC-CE that indicates to deactivate the configured measurement gap requirement information; or when the measurement gap requirement information indicates that the measurement gap is required, sending, to the terminal device, a MAC-CE that indicates to activate the configured measurement gap requirement information.

Optionally, the measurement gap requirement information sent by the terminal device is carried in an RRC reconfiguration complete message.

Optionally, the measurement gap requirement information sent by the terminal device is carried in other uplink signaling.

In this implementation, the network device deactivates or activates the configured measurement gap configuration information by using the MAC-CE based on the measurement gap requirement information reported by the terminal device. In this way, flexibility of configuring the measurement gap can be improved.

With reference to the third aspect, in a possible implementation of the third aspect, the sending a MAC-CE to the terminal device includes: sending the MAC-CE to the terminal device based on a measurement gap capability of the terminal device.

When it is determined, based on the measurement gap capability of the terminal device, that the terminal device does not require the measurement gap, the MAC-CE that indicates to deactivate the configured measurement gap requirement information is sent to the terminal device; or when it is determined, based on the measurement gap capability of the terminal device, that the terminal device requires the measurement gap, the MAC-CE that indicates to activate the configured measurement gap requirement information is sent to the terminal device.

With reference to the third aspect, in a possible implementation of the third aspect, the sending a MAC-CE to the terminal device includes: sending the MAC-CE to the terminal device based on a protocol.

In a scenario, specified in the protocol, in which the measurement gap is not required, the MAC-CE that indicates to deactivate the configured measurement gap requirement information is sent to the terminal device.

In a scenario, specified in the protocol, in which the measurement gap is required, the MAC-CE that indicates to activate the configured measurement gap requirement information is sent to the terminal device.

According to a fourth aspect, a communication method is provided. The communication method includes: receiving measurement configuration information from a network device, where the measurement configuration information carries measurement gap configuration information; and receiving a MAC-CE from the network device, where the MAC-CE indicates to deactivate configured measurement gap configuration information, or the MAC-CE indicates to activate configured measurement gap configuration information.

In this application, the network device deactivates or activates the measurement gap configuration information by using the MAC-CE. Compared with using RRC signaling, a transmission delay can be reduced.

With reference to the fourth aspect, in a possible implementation of the fourth aspect, the method further includes: sending measurement gap requirement information to the network device, where the measurement gap requirement information indicates that a measurement gap is required or not required.

For example, the measurement configuration information indicates a measurement task. When it is determined that the measurement task does not require the measurement gap, measurement gap requirement information indicating that the measurement gap is not required is sent to the network device. When it is determined that the measurement task requires the measurement gap, measurement gap requirement information indicating that the measurement gap is required is sent to the network device.

Optionally, the measurement gap requirement information sent by a terminal device is carried in an RRC reconfiguration complete message.

Optionally, the measurement gap requirement information sent by the terminal device is carried in other uplink signaling.

In this implementation, the network device may send the MAC-CE to the terminal device based on the measurement gap requirement information reported by the terminal device. When the measurement gap requirement information indicates that the measurement gap is not required, the MAC-CE that indicates to deactivate the configured measurement gap requirement information is sent to the terminal device. Alternatively, when the measurement gap requirement information indicates that the measurement gap is required, the MAC-CE that indicates to activate the configured measurement gap requirement information is sent to the terminal device.

In this implementation, the network device deactivates or activates the configured measurement gap configuration information by using the MAC-CE based on the measurement gap requirement information reported by the terminal device. In this way, flexibility of configuring the measurement gap can be improved.

According to a fifth aspect, a communication apparatus is provided. The communication apparatus is configured to perform the method provided in the first aspect, the second aspect, the third aspect, or the fourth aspect.

Optionally, the communication apparatus may include a module configured to perform the method provided in the first aspect, the second aspect, the third aspect, or the fourth aspect.

According to a sixth aspect, a communication apparatus is provided. The communication apparatus includes a memory and a processor, the memory is configured to store instructions, the processor is configured to execute the instructions stored in the memory, and execution of the instructions stored in the memory enables the processor to perform the method provided in the first aspect, the second aspect, the third aspect, or the fourth aspect.

According to a seventh aspect, a chip is provided. The chip includes a processing module and a communication interface, the processing module is configured to control the communication interface to perform external communication, and the processing module is further configured to implement the method provided in the first aspect, the second aspect, the third aspect, or the fourth aspect.

According to an eighth aspect, a computer-readable storage medium is provided. The computer-readable storage medium stores a computer program. When the computer program is executed by a computer, the computer is enabled to perform the method provided in the first aspect, the second aspect, the third aspect, or the fourth aspect.

According to a ninth aspect, a computer program product including instructions is provided. When the instructions are executed by a computer, the computer is enabled to implement the method provided in the first aspect, the second aspect, the third aspect, or the fourth aspect.

Based on the foregoing descriptions, in this application, the measurement gap configuration status is determined based on the measurement gap requirement information reported by the terminal device. In this way, on the one hand, flexibility of configuring the measurement gap can be improved, and on the other hand, unnecessary communication interruption between the terminal device and the serving cell can be avoided, thereby improving communication efficiency. In addition, the measurement gap requirement information reported by the terminal device is directly used to activate or validate, or deactivate or release the measurement gap configuration information, so that the network device does not need to reconfigure or release the measurement gap through the RRC signaling. In this way, signaling overheads can be reduced.

### BRIEF DESCRIPTION OF DRAWINGS

FIG. 1 and FIG. 2 are schematic diagrams of a communication system applicable to an embodiment of this application;
FIG. 3 is a schematic flowchart of a communication method according to an embodiment of this application;
FIG. 4 is another schematic flowchart of a communication method according to an embodiment of this application;
FIG. 5 is a schematic block diagram of a communication device according to an embodiment of this application;
FIG. 6 is another schematic block diagram of a communication device according to an embodiment of this application;
FIG. 7 is a schematic diagram of a structure of a terminal device according to an embodiment of this application; and
FIG. 8 is a schematic diagram of a structure of a network device according to an embodiment of this application.

### DESCRIPTION OF EMBODIMENTS

The following describes technical solutions of this application with reference to the accompanying drawings.

Unless otherwise defined, all technical and scientific terms used in this specification have a same meaning as that usually understood by a person skilled in the art of this application. The terms used in the specification of this application are merely for the purpose of describing specific embodiments, and are not intended to limit this application.

For ease of understanding of the embodiments of this application, the following describes some related concepts.

### 1. Mobility management

Mobility management is an important part of wireless mobile communication. Mobility management is a general term of related content to ensure that a communication link between a network and user equipment (user equipment, UE) is not interrupted due to movement of the UE. Based on a UE status, mobility management may be classified into two parts: mobility management in an idle state (RRC_IDLE state)/inactive state (RRC_INACTIVE state) and mobility management in a connected state (RRC CONNECTED state). In the idle state/inactive state, mobility management mainly means a cell selection/reselection (cell selection/reselection) process, and in the connected state, mobility management mainly means cell handover (handover). Cell selection/reselection and handover are all performed based on results of measurement. Therefore, mobility measurement is the basis of mobility management.

In a new radio (new radio, NR) (or 5G) system, mobility measurement is performed based on a beam (beam). The following briefly describes a beam, and then describes mobility measurement in NR.

### 2. Beam

A beam may be understood as a spatial resource, and may be a transmit or receive precoding vector having energy transmission directivity.

The transmit or receive precoding vector can be identified by using index information, and the index information may correspond to a configured resource identifier (identifier, ID) of a terminal. For example, the index information may correspond to a configured identifier or a configured resource of a channel state information reference signal (channel statement information reference signal, CSI-RS), or may correspond to a configured identifier or a configured resource of a synchronization signal/physical broadcast channel block (Synchronization signal/physical broadcast channel block, SS/PBCH block) (an SS/PBCH block may also be referred to as an SSB for short), or may correspond to a configured identifier or a configured resource of an uplink sounding reference signal (Sounding Reference Signal, SRS).

Optionally, the index information may alternatively be index information explicitly or implicitly carried by a signal or a channel that is carried by the beam. The energy transmission directivity may mean that precoding processing is performed through a precoding vector on a signal that needs to be sent, and a signal obtained after the precoding processing is performed has specific spatial directivity. The received signal obtained after the precoding processing is performed through the precoding vector has a relatively good receive power, for example, a received demodulation signal-to-noise ratio is met. The energy transmission directivity may alternatively mean that receiving, through the precoding vector, same signals sent from different spatial positions and having different receive powers.

Optionally, a same communication apparatus (for example, a terminal device or a network device) may have different precoding vectors, and different devices may also have different precoding vectors, that is, correspond to different beams. For a configuration or a capability of a communication apparatus, one communication apparatus may use one or more of a plurality of different precoding vectors at a same moment, in other words, one or more beams may be simultaneously formed.

### 3. Mobility measurement in NR (5G)

An overall procedure of measurement in NR is as follows:
Generally, measurement may be classified into two parts: physical layer measurement (layer 1 measurement) and RRC layer measurement (layer 3 measurement) based on related layers.

At a physical layer, UE performs specified-type measurement on a configured measurement resource. All measurement types supported by NR are defined in 38.215.

For SSB-based measurement, the UE combines measurement results obtained from a plurality of SSBs that have a same SSB index and a same physical cell identifier (physical cell identifier, PCI), obtains a beam-level layer 1 measurement result of an SSB corresponding to the SSB index of a cell corresponding to the PCI, and reports the result to a layer 3.

For CSI-RS-based measurement, the UE combines measurement results obtained from a plurality of CSI-RS resources that have a same CSI-RS resource identifier (resource identifier) and a same PCI, obtains a beam layer 1 measurement result of a CSI-RS resource corresponding to the CSI-RS resource identifier of a cell corresponding to the PCI, and reports the result to the layer 3.

The foregoing process of combining measurement results on a plurality of measurement resources is referred to as layer 1 filtering. A specific combination manner is implemented by the UE and is not specified in a standard. However, the UE needs to ensure that measurement meets a series of indicators in terms of delay and accuracy defined in 38.133.

After the layer 3 receives the beam-level measurement result reported by the layer 1, the UE needs to select/combine layer 1 measurement results of all beams of a same cell, to derive a cell-level layer 3 measurement result. A specific selection/combination manner is defined in 38.331. Then, layer 3 filtering needs to be performed on the obtained cell-level layer 3 measurement result. It is noted that only a measurement result obtained after the layer 3 filtering is used to verify whether a reporting trigger condition is met and used for final reporting.

In addition, the UE may also need to report a beam-level layer 3 measurement result based on a configuration. In this case, the UE directly performs layer 3 filtering on a layer 1 measurement result of each beam, and then selects, from filtered measurement results, a to-be-reported measurement result for reporting. A specific selection manner is defined in 38.331.

In 38.300, the UE is required to verify the reporting trigger condition at least when a new cell-level measurement result is generated. When the reporting trigger condition is met, the UE needs to send a measurement report to a network.

### 4. Measurement configuration

In a measurement configuration phase, a network sends information required for measurement to UE through signaling.

In a connected state, the signaling sent on a network side may be RRC reconfiguration signaling (RRC Reconfiguration), and a measurement configuration (measConfig) information element of the signaling includes measurement configuration information sent to the UE. In 38.331, the network side is required to ensure that:
(1) the measurement configuration includes a corresponding measurement object for each serving frequency; and
(2) the network side configures a measurement identity only when the corresponding measurement object, a reporting configuration, and a measurement quantity have been configured for the UE.

After receiving the signaling, the UE correspondingly modifies a measurement configuration database and a measurement report list of the UE, and notifies the network of a modification success message (RRC Reconfiguration complete).

The measurement configuration information includes the following configuration information:
a measurement object (measurement object, MO), where in LTE, one measurement object corresponds to one frequency, during measurement object configuration, the network notifies the UE of necessary information required to measure the frequency, including a configuration status of a measurement resource on the frequency, a list of cells on the frequency, and the like, and in NR, for intra-frequency measurement and inter-frequency measurement, the measurement object indicates a frequency-domain/time-domain position and a subcarrier spacing of a to-be-measured reference signal. For inter-RAT E-UTRA measurement, the measurement object corresponds to an E-UTRA frequency;
a reporting configuration (reporting configuration), where in the reporting configuration, the network notifies the UE of specific details of to-be-performed measurement, including a measurement type, a reporting trigger manner, a reporting format, and the like;
a measurement identity (measurement identity), where a measurement identity is a combination of a measurement object and a reporting configuration, the combination of the measurement object and the reporting configuration determines various details of measurement on the measurement object, and any measurement object or report configuration can be associated with any one/a plurality of/zero reporting configuration/configurations/measurement object/objects that has/have a same RAT type;
a measurement quantity configuration (quantity configuration), where the measurement quantity configuration means a configuration of a layer 3 filtering coefficient, layer 3 filtering needs to be first performed before a trigger measurement quantity is used to verify whether a reporting trigger condition is met and a reporting measurement quantity is finally reported, and the layer 3 filtering coefficient is notified to the UE through the measurement quantity configuration; and
a measurement gap (measurement gap) configuration, where if intra-frequency/inter-frequency/inter-RAT measurement relates to a switching center frequency, intra-frequency/inter-frequency/inter-RAT measurement and data transmission cannot be simultaneously performed, and the network needs to configure a measurement gap for intra-frequency/inter-frequency/inter-RAT measurement.

### 5. Measurement gap (measurement gap)

When UE in a connected state performs measurement, the UE may need to perform radio frequency (RF) switching to measure a target reference signal. Consequently, measurement and data receiving and sending of a serving cell cannot be simultaneously performed. Therefore, a network configures a measurement gap (measurement gap) for the UE in a measurement configuration (measConfig). During the measurement gap, data receiving and sending between the UE and the serving cell are not required, and the UE may perform measurement.

A measurement gap configuration (measGapConfig) is carried in the measurement configuration (measConfig).

For example, in NR, the measurement gap configuration (measGapConfig) may include a gap type, a gap offset (gapOffset), a gap length (MGL) (unit: millisecond (ms)), a gap repetition period (MGRP) (unit: ms), a gap timing advance (measurement gap timing advance, MGTA) (unit: ms), and the like.

The gap type may include gapUE, a gapFR1, and a gapFR2. The gapUE indicates a gap of per UE (per UE), the gapFR1 indicates that the gap is applicable only to an FR1, and the gapFR2 indicates that the gap is applicable only to an FR2.

### 6. Measurement gap pattern

(1) A per-UE measurement gap (per-UE gap) indicates a measurement gap that all UEs need to support. The per-UE measurement gap is a measurement gap applicable to both the FR1 and the FR2.
(2) In NR, it is proposed that a per-frequency range measurement gap (per-FR gap) may be further supported based on a capability of UE.

In the per-UE gap, the UE is not required to perform transmission, the UE is not required to receive data from any serving cell other than a reference signal for measurement, and the UE is not required to switch a frequency to a frequency of any serving cell.

In the per-FR gap, a group of measurement gap patterns is defined for the FR1 and FR2 frequency bands, and each group of measurement gap patterns is applicable only to a corresponding frequency band.

In the per-FR gap, the UE is not required to transmit data to a cell in a corresponding frequency band, the UE is not required to receive data from any serving cell other than a reference signal for measurement in the corresponding frequency band, and the UE is not required to switch a frequency to a frequency of any serving cell in the corresponding frequency band.

### 7. Bandwidth part (bandwidth part, BWP)

The BWP is a new concept proposed in an NR standard. The BWP indicates a segment of consecutive bandwidth resources configured by a network side for UE. The BWP may implement a flexible transmission bandwidth configuration on the network side and a UE side.

Application scenarios of the BWP may include the following three scenarios.

Scenario 1: UE having a small-bandwidth capability accesses a large-bandwidth network.

Scenario 2: UE switches between small and large BWPs to save power.

Scenario 3: Different BWPs are configured with different numerologies to carry different services.

Different BWPs may be configured for different UEs, which may be referred to as a per-UE concept of the BWP.

The UE does not need to know a transmission bandwidth on the network side, and only needs to support information about a BWP bandwidth configured for the UE.

BWPs are classified as follows:
(1) an initial BWP (Initial BWP): a BWP configured in an initial access phase of the UE, where a signals and a channel during initial access are transmitted in the initial BWP;
(2) a dedicated BWP (Dedicated BWP): a BWP configured for the UE in an RRC connected state, where one UE may be configured with a maximum of four dedicated BWPs;
(3) an active BWP (Active BWP): a BWP that is activated by the UE in the RRC connected state at a moment and is one of dedicated BWPs, where
   the UE in the RRC connected state can have only one active BWP at a moment in the R15 protocol; and
(4) a default BWP (Default BWP): where when the UE is in the RRC connected state, the UE returns to the default BWP after a BWP inactivity timer (BWP inactivity timer) expires.

The default BWP is one of the dedicated BWPs. A network uses RRC signaling to indicate to the UE that a specific configured dedicated BWP serves as the default BWP.

Currently, in NR, except for several special scenarios, specified in a protocol, in which a terminal device does not require a measurement gap, the network side configures the measurement gap for the terminal device, making flexibility of configuring the measurement gap relatively poor.

In view of the foregoing problem, this application provides a communication method and apparatus, to effectively improve flexibility of configuring a measurement gap.

The technical solutions in the embodiments of this application may be applied to various communication systems, for example, a 5th generation (5th generation, 5G) system, a new radio (new radio, NR), a machine-to-machine communication (machine-to-machine, M2M) system, and another future evolved communication system. This is not limited in the embodiments of this application.

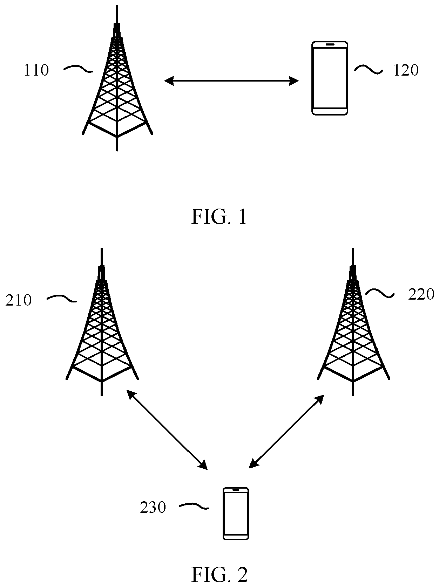

FIG. 1 is a schematic diagram of a communication system 100 applicable to an embodiment of this application.

The communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a wireless link.

FIG. 2 is a schematic diagram of a communication system 200 applicable to an embodiment of this application.

The communication system 200 may include at least two network devices, for example, network devices 210 and 220 shown in FIG. 2. The communication system 200 may further include at least one terminal device, for example, a terminal device 230 shown in FIG. 2. The terminal device 230 may establish wireless links to the network device 110 and the network device 120 by using a dual connectivity (dual connectivity, DC) technology or a multi-connectivity technology. The network device 210 may be, for example, a master base station, and the network device 220 may be, for example, a secondary base station. In this case, the network device 210 is a network device used when the terminal device 230 performs initial access, and is responsible for radio resource control (radio resource control, RRC) communication with the terminal device 230. The network device 220 may be added during RRC reconfiguration, and is configured to provide an additional radio resource.

Optionally, one of the two network devices shown in FIG. 2, for example, the network device 210, may be referred to as a master node (master node, MN), and is responsible for exchanging a radio resource control message with the terminal device 230 and responsible for interacting with a core network control plane entity. For example, the master node may be an MeNB or an MgNB. This is not limited in this application. The other network device in the two network devices shown in FIG. 2, for example, the network device 220, may be referred to as a secondary node (secondary node, SN). For example, the secondary node may be an SeNB or an SgNB. This is not limited in this application. A plurality of serving cells in the master node may form a master cell group (master cell group, MCG), including one primary cell (primary cell, PCell) and one or more optional secondary cells (secondary cell, SCell). A plurality of serving cells in the secondary node may form a secondary cell group (secondary cell group, SCG), including one primary secondary cell (primary secondary cell, PSCell, may also be referred to as a special cell) and one or more optional SCells. The serving cell is a cell that is configured by a network for the terminal device to perform uplink and downlink transmission.

Similarly, the terminal device may alternatively have communication connections to a plurality of network devices simultaneously and may receive and send data. In the plurality of network devices, there may be one network device responsible for exchanging a radio resource control message with the terminal device and responsible for interacting with a core network control plane entity. In this case, the network device may be referred to as an MN, and other network devices may be referred to as SNs.

Optionally, the network device 220 may alternatively be a master base station or a master node, and the network device 210 may alternatively be a secondary base station or a secondary node. This is not limited in this application.

It should be understood that FIG. 1 and FIG. 2 are merely examples rather than limitations. For example, FIG. 1 shows a case of a wireless connection between one terminal device and one network device, and FIG. 2 shows a case of wireless connections between two network devices and a terminal device. However, this should not constitute any limitation on a scenario to which this application is applicable. The terminal device may further establish wireless links to more network devices.

A plurality of antennas may be configured for each communication device shown in FIG. 1 and FIG. 2, for example, the network device 110 or the terminal device 120 in FIG. 1, or the network device 210, the network device 220, or the terminal device 230 in FIG. 2. The plurality of antennas may include at least one transmit antenna used to send a signal and at least one receive antenna used to receive a signal. In addition, each communication device additionally includes a transmitter chain and a receiver chain. A person of ordinary skill in the art may understand that the transmitter chain and the receiver chain each may include a plurality of components related to signal sending and receiving (for example, a processor, a modulator, a multiplexer, a demodulator, a demultiplexer, or an antenna). Therefore, the network device and the terminal device may communicate with each other by using a multi-antenna technology.

The network device in this embodiment of this application may be a device configured to communicate with the terminal device, or may be any device having a wireless transceiver function or a chip that may be disposed in the device. The network device may be a base station. The base station may be configured to communicate with one or more terminal devices, or may be configured to communicate with one or more base stations having some functions of the terminal device (for example, communication between a macro base station and a micro base station). The network device may be a device that communicates with a wireless terminal over an air interface in an access network by using one or more sectors. The network device may further coordinate attribute management of the air interface. For example, the network device may be an evolved base station in LTE, or the network device may be a base station in a 5G system, an NR system, an M2M system, or another future evolved communication system. In addition, the network device may alternatively be an access point (access point, AP), a transmission node (transport point, TRP), a centralized unit (centralized unit, CU), a distributed unit (distributed unit, DU), or another network entity, and may include some or all of functions of the foregoing network entity. This is not limited in this embodiment of this application. It should be noted that, the network device in this embodiment of the present invention may be a base station device, or may be a relay device, or another network element device having a base station function.

The terminal device in this embodiment of this application may be a device that provides voice and/or data connectivity for a user. The terminal device is a handheld device having a wireless connection function, or another processing device connected to a wireless modem. The terminal device may communicate with the network device through a radio access network (Radio Access Network, RAN). The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future evolved public land mobile network (public land mobile network, PLMN), or the like. This is not limited in this embodiment of this application.

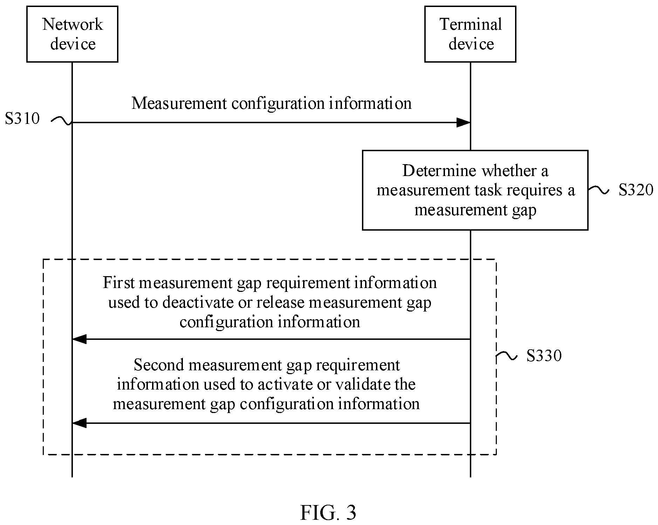

FIG. 3 is a schematic flowchart of a communication method 300 according to an embodiment of this application. The communication method 300 includes the following steps.

S310: A network device sends measurement configuration information to a terminal device, where the measurement configuration information indicates a measurement task. Correspondingly, the terminal device receives the measurement configuration information from the network device.

For example, the network device sends an RRC reconfiguration (RRCReconfiguration) message to the terminal device, where the RRC reconfiguration message includes the measurement configuration (measConfig) information.

S320: After receiving the measurement configuration information, the terminal device determines whether the measurement task requires a measurement gap.

S330: If the measurement task does not require the measurement gap, the terminal device sends first measurement gap requirement information indicating that the measurement gap is not required to the network device, where the first measurement gap requirement information is used to deactivate or release configured measurement gap configuration information; and/or

if the measurement task requires the measurement gap, the terminal device sends second measurement gap requirement information indicating that the measurement gap is required to the network device, where the second measurement gap requirement information is used to activate or validate measurement gap configuration information corresponding to the second measurement gap requirement information.

That the first measurement gap requirement information is used to deactivate or release configured measurement gap configuration information means that the terminal device considers that the configured measurement gap configuration information is deactivated or released after sending the first measurement gap requirement information and the network device deactivates or releases the configured measurement gap information after receiving the first measurement gap requirement information. In other words, after receiving the first measurement gap requirement information, the network device does not need to deactivate/release the measurement gap through RRC signaling, and the terminal device considers that the configured measurement gap configuration information is deactivated or released.

The configured measurement gap configuration information may be measurement gap configuration information carried in the measurement configuration information in step S310.

That the second measurement gap requirement information is used to activate or validate measurement gap configuration information corresponding to the second measurement gap requirement information means that the terminal device considers that the measurement gap configuration information corresponding to the second measurement gap requirement information is activated or validated after sending the second measurement gap requirement information and the network device activates or validates the measurement gap configuration information corresponding to the second measurement gap requirement information after receiving the second measurement gap requirement information. In other words, after receiving the second measurement gap requirement information, the network device does not need to activate/validate a measurement configuration through RRC signaling, and the terminal device considers that the measurement gap configuration information corresponding to the second measurement gap requirement information is activated or validated.

The measurement gap configuration information corresponding to the second measurement gap requirement information may be configured measurement gap configuration information, or may be new measurement gap configuration information different from the configured measurement gap configuration information.

In this application, the terminal device determines, based on whether a current measurement task requires a measurement gap, whether to send measurement gap requirement information to the network device. When the terminal device sends the measurement gap requirement information to the network device, if the measurement gap requirement information indicates that the measurement gap is not required, configured measurement gap configuration information is automatically deactivated or released; or if the measurement gap requirement information indicates that the measurement gap is required, measurement gap configuration information corresponding to the measurement gap requirement information is automatically activated or validated.

The terminal device sends the measurement gap requirement information indicating that the measurement gap is not required to the network device, so that the configured measurement gap configuration information is directly deactivated or released, thereby avoiding unnecessary communication interruption between the terminal device and a serving cell. In addition, in a process of deactivating or releasing the configured measurement gap configuration information, the network device does not need to deliver the RRC signaling for configuration, so that signaling overheads can be reduced, and a transmission delay can be reduced.

The terminal device sends the measurement gap requirement information indicating that the measurement gap is required to the network device, so that the measurement gap configuration information corresponding to the measurement gap requirement information is directly activated or validated, thereby meeting a measurement requirement of the measurement task. In addition, in a process of activating or validating the measurement gap configuration information, the network device does not need to deliver the RRC signaling for configuration, so that signaling overheads can be reduced, and a transmission delay can be reduced.

Therefore, in this application, a measurement gap configuration status is determined based on the measurement gap requirement information reported by the terminal device. In this way, on the one hand, flexibility of configuring the measurement gap can be improved, and on the other hand, unnecessary communication interruption between the terminal device and the serving cell can be avoided, thereby improving communication efficiency. In addition, the measurement gap requirement information reported by the terminal device is directly used to activate or validate, or deactivate or release the measurement gap configuration information, so that the network device does not need to reconfigure or release the measurement gap through the RRC signaling. In this way, signaling overheads can be reduced.

Optionally, in step S330, the terminal device may include the measurement gap requirement information in an RRC reconfiguration complete (RRCReconfigurationComplete) message.

Optionally, in step S330, the terminal device may alternatively include the measurement gap requirement information in other uplink signaling.

Whether the terminal device sends the measurement gap requirement information to the network device may be implemented in the following several manners.

### Implementation 1:

If the measurement task does not require the measurement gap, the terminal device sends the first measurement gap requirement information to the network device, where the first measurement gap requirement information is used to deactivate or release the configured measurement gap configuration information; or if the measurement task requires the measurement gap, the terminal device sends the second measurement gap requirement information to the network device, where the second measurement gap requirement information is used to activate or validate the measurement gap configuration information corresponding to the second measurement gap requirement information.

### The implementation 1 is applicable to a scenario in which the network device preconfigures the measurement gap for the terminal device. For example, the measurement configuration information in step S310 carries the measurement gap configuration information. The implementation 1 is also applicable to a scenario in which the network device does not preconfigure the measurement gap for the terminal device. For example, the measurement configuration information in step S310 does not carry the measurement gap configuration information.

### Implementation 2:

If the measurement task does not require the measurement gap, the terminal device sends the first measurement gap requirement information to the network device, where the first measurement gap requirement information is used to deactivate or release the configured measurement gap configuration information; or if the measurement task requires the measurement gap, the terminal device does not send the measurement gap requirement information to the network device.

It should be understood that the terminal device sends the measurement gap requirement information to the network device only when the measurement gap is not required, to deactivate or release the configured measurement gap configuration information. The terminal device does not need to send the measurement gap requirement information when the measurement gap is required. In this way, signaling overheads can be further reduced.

The implementation 2 is applicable to a scenario in which the network device preconfigures the measurement gap for the terminal device. For example, the measurement configuration information in step S310 carries the measurement gap configuration information.

### Implementation 3:

If the measurement task requires the measurement gap, the terminal device sends the second measurement gap requirement information to the network device, where the second measurement gap requirement information is used to activate or validate the measurement gap configuration information corresponding to the second measurement gap requirement information; or if the measurement task does not require the measurement gap, the terminal device does not send the measurement gap requirement information to the network device.

It should be understood that the terminal device sends the measurement gap requirement information to the network device only when the measurement gap is required, to activate or validate the required measurement gap configuration information. The terminal device does not need to send the measurement gap requirement information when the measurement gap is not required. In this way, signaling overheads can be further reduced.

The implementation 3 is applicable to a scenario in which the network device preconfigures the measurement gap for the terminal device. For example, the measurement configuration information in step S310 carries the measurement gap configuration information. The implementation 3 is also applicable to a scenario in which the network device does not preconfigure the measurement gap for the terminal device. For example, the measurement configuration information in step S310 does not carry the measurement gap configuration information.

Optionally, in an embodiment in which the terminal device sends the second measurement gap requirement information to the network device, the second measurement gap requirement information may include a measurement gap parameter, and the second measurement gap requirement information is used to validate the measurement gap configuration information corresponding to the measurement gap parameter.

This embodiment is applicable to a scenario in which the measurement configuration information does not include the measurement gap configuration information, or is applicable to a scenario in which the configured measurement gap configuration information does not meet a measurement requirement of the measurement task.

The measurement gap parameter carried in the second measurement gap requirement information may be determined based on the measurement requirement of the measurement task.

For example, the measurement gap parameter includes any one or more of the following: a gap type, a gap offset (gapOffset), a gap length (MGL) (unit: millisecond (ms)), a gap repetition period (MGRP) (unit: ms), a gap timing advance (measurement gap timing advance, MGTA) (unit: ms), and the like.

Optionally, the second measurement gap requirement information includes the measurement gap parameter, and further includes indication information that explicitly indicates that the measurement gap is required.

Optionally, the second measurement gap requirement information includes the measurement gap parameter, and does not include indication information that explicitly indicates that the measurement gap is required. The measurement gap parameter implicitly indicates that the measurement gap is required.

In this embodiment, after receiving the second measurement gap requirement information, the network device may modify a related parameter in the configured measurement gap configuration information based on the measurement gap parameter carried in the second measurement gap requirement information, and communicate with the terminal device based on modified measurement gap configuration information.

Alternatively, after receiving the second measurement gap requirement information, the network device may regenerate corresponding measurement gap configuration information based on the measurement gap parameter carried in the second measurement gap requirement information, and communicate with the terminal device based on the new measurement gap configuration information.

In this embodiment, the terminal device sends, to the network device, the measurement gap requirement information that carries the measurement gap parameter, so that the measurement gap configuration information corresponding to the measurement gap parameter is directly activated or validated. In this process, the network device does not need to deliver the RRC signaling for configuration, so that signaling overheads can be reduced, and a transmission delay can be reduced.

Optionally, in some embodiments, the measurement configuration information delivered by the network device in step S310 carries the measurement gap configuration (measGapConfig) information (denoted as first measurement gap configuration information). In this embodiment, if the terminal device sends the first measurement gap requirement information to the network device, the first measurement gap requirement information is used to deactivate or invalidate the first measurement gap requirement information. If the terminal device sends the second measurement gap requirement information to the network device, the second measurement gap requirement information is used to activate or validate the first measurement gap requirement information.

Optionally, in some embodiments, the measurement configuration information delivered by the network device in step S310 carries the measurement gap configuration information (denoted as the first measurement gap configuration information), and the first measurement gap configuration information is validated by default.

In this embodiment, the terminal device may use the implementation 1 or the implementation 2. If the terminal device sends the first measurement gap requirement information to the network device, the first measurement gap requirement information is used to deactivate or invalidate the first measurement gap requirement information. If the terminal device sends the second measurement gap requirement information to the network device, the second measurement gap requirement information is used to activate or validate the first measurement gap requirement information.

Optionally, in some embodiments, the measurement configuration information delivered by the network device in step S310 carries the measurement gap configuration information (denoted as the first measurement gap configuration information), and the first measurement gap configuration information is not validated by default.

In this embodiment, the terminal device may use the implementation 1 or the implementation 3. If the terminal device sends the first measurement gap requirement information to the network device, the first measurement gap requirement information is used to deactivate or invalidate the first measurement gap requirement information. If the terminal device sends the second measurement gap requirement information to the network device, the second measurement gap requirement information is used to activate or validate the first measurement gap requirement information.

Optionally, in some embodiments, the measurement configuration information delivered by the network device in step S310 does not carry the measurement gap configuration information.

In this embodiment, the terminal device may use the implementation 3. If the terminal device sends the second measurement gap requirement information to the network device, the second measurement gap requirement information includes the measurement gap parameter, and the second measurement gap requirement information is used to validate the measurement gap configuration information corresponding to the measurement gap parameter.

The release and the deactivation in this application have different meanings. That the measurement gap configuration information is released means that the measurement gap configuration information is entirely deleted. If measurement gap configuration information needs to be used next time, the measurement gap configuration information needs to be reconfigured. That the measurement gap configuration information is deactivated means that the measurement gap configuration information is invalid within a period of time but the configuration information is not released; and if the configuration information is subsequently activated, the configuration information is validated again and can continue to be used.

Meanings of the activation and the validation in this application may be considered to be the same. In short, the measurement gap configuration information is validated. Certainly, the two actions can be distinguished if necessary. For example, if configuration information becomes valid again after being invalid, this process may be referred to as activation.

Optionally, in some of the foregoing embodiments, if the terminal device sends the first measurement gap requirement information to the network device, the first measurement gap requirement information is used to deactivate the configured measurement gap requirement information. If the terminal device sends the second measurement gap requirement information to the network device, the second measurement gap requirement information is used to activate the measurement gap requirement information corresponding to the second measurement gap requirement information.

Optionally, in some of the foregoing embodiments, if the terminal device sends the first measurement gap requirement information to the network device, the first measurement gap requirement information is used to release the configured measurement gap requirement information. If the terminal device sends the second measurement gap requirement information to the network device, the second measurement gap requirement information is used to validate the measurement gap requirement information corresponding to the second measurement gap requirement information.

Optionally, in some embodiments, the measurement gap requirement information sent by the terminal device to the network device may be at least 1-bit information. When the 1-bit information is a first value, it indicates that the measurement gap is not required (that is, the first measurement gap requirement information is sent). When the 1-bit information is a second value, it indicates that the measurement gap is required (that is, the second measurement gap requirement information is sent).

For example, when the 1-bit information is "0", it indicates that the measurement gap is not required (that is, the first measurement gap requirement information is sent). When the 1-bit information is "1", it indicates that the measurement gap is required (that is, the second measurement gap requirement information is sent). Alternatively, when the 1-bit information is "1", it indicates that the measurement gap is not required (that is, the first measurement gap requirement information is sent). When the 1-bit information is "0", it indicates that the measurement gap is required (that is, the second measurement gap requirement information is sent).

In this application, there are a plurality of trigger conditions for the terminal device to report the measurement gap requirement information.

Trigger condition 1: The measurement configuration information is received.

Optionally, in some embodiments, each time after receiving measurement configuration information delivered by the network device, the terminal device determines whether a measurement task indicated by the measurement configuration information requires the measurement gap, and determines, based on a determining result, whether to send the measurement gap requirement information to the network device.

The measurement configuration information may be measurement configuration information delivered by the network device for the first time.

Alternatively, the measurement configuration information may be measurement update configuration information that is sent again by the network device after the network device delivers the measurement configuration information once.

It should be understood that, when the measurement task changes, a requirement of the measurement task for the measurement gap may change. When the requirement changes, the measurement gap requirement information is sent to the network device, to help obtain the measurement gap configuration information that meets the measurement requirement.

It should be understood that the network device does not need to carry the measurement gap configuration information each time the measurement configuration information is configured for the terminal device.

If the measurement gap configuration information has been configured, the subsequent measurement update configuration information may not carry the measurement gap configuration information unless the measurement gap needs to be updated. If the measurement gap configuration information is not previously configured, the subsequent measurement update configuration information may carry the measurement gap configuration information, or may not carry the measurement gap configuration information. The following three cases are included.

Case 1: The network device has preconfigured the measurement gap configuration information for the terminal device, and the measurement update configuration information does not carry the measurement gap configuration information,

In this case, when the network device sends the measurement update configuration information to the terminal device, the preconfigured measurement gap configuration information is activated or validated by default. In other words, provided that the preconfigured measurement gap configuration information is not released, regardless of a specific status (for example, deactivation, activation, or validation by default) of the preconfigured measurement gap configuration information before the measurement update configuration information is sent, after the measurement update configuration information is sent, the preconfigured measurement gap configuration information is activated by default.

After receiving the measurement update configuration information, the terminal device determines whether a measurement task indicated by the measurement update configuration information requires the measurement gap, and determines, based on a determining result and the preconfigured measurement gap configuration information, whether to send the measurement gap requirement information to the network device.

Case 2: The measurement update configuration information carries the measurement gap configuration information.

In this case, regardless of whether the network device has preconfigured the measurement gap configuration information for the terminal device, after receiving the measurement update configuration information, the terminal device determines whether a measurement task indicated by the measurement update configuration information requires the measurement gap, and determines, based on a determining result and the measurement gap configuration information carried in the measurement update configuration information, whether to send the measurement gap requirement information to the network device.

Case 3: The network device does not preconfigure the measurement gap configuration information for the terminal device, and the measurement update configuration information does not carry the measurement gap configuration information, either.

In this case, after receiving the measurement update configuration information, the terminal device sends the second measurement gap requirement information to the network device when determining that the measurement task requires the measurement gap, where the second measurement configuration gap requirement information includes the measurement gap parameter.

Trigger condition 2: A serving cell (SCell) configuration changes.

Optionally, in some embodiments, when the serving cell configuration changes, the terminal device includes the first measurement gap requirement information or the second measurement gap requirement information in the configuration complete message.

For example, the terminal device receives an RRC reconfiguration message from the network device, where the RRC reconfiguration message carries information indicating that the serving cell configuration changes.

A change of the serving cell configuration includes any one or more of the following: serving cell addition (SCell addition), serving cell removal (SCell removal), and serving cell configuration modification.

It should be understood that when the serving cell configuration changes, the following case may occur: Before the serving cell configuration changes, the terminal device performs a measurement task that requires the measurement gap (or that does not require the measurement gap), and after the serving cell configuration changes, the terminal device performs a measurement task that does not require the measurement gap (or that requires the measurement gap).

Therefore, when the serving cell configuration changes, the terminal device determines whether the measurement task requires the measurement gap, and may report the measurement gap requirement information to the network device based on a determining result, so that it can be effectively ensured that the measurement configuration information meets the measurement requirement.

In this application, the measurement gap configuration status is determined based on the measurement gap requirement information reported by the terminal device. In this way, on the one hand, flexibility of configuring the measurement gap can be improved, and on the other hand, unnecessary communication interruption between the terminal device and the serving cell can be avoided, thereby improving communication efficiency. In addition, the measurement gap requirement information reported by the terminal device is directly used to activate or validate, or deactivate or release the measurement gap configuration information, so that the network device does not need to reconfigure or release the measurement gap through the RRC signaling. In this way, signaling overheads can be reduced.

It should be further noted that, in a special scenario, specified in the protocol, in which the terminal device does not require the measurement gap, the network device may not configure the measurement gap for the terminal device.

In an example, several special scenarios specified in the protocol are as follows:
(1) For SSB-based inter-frequency (inter-frequency) measurement, the terminal device supports a per-FR gap, and BWP frequencies configured for all serving cells and a frequency in an MO are not in a same FR.
(2) For SSB-based intra-frequency (intra-frequency) measurement, any configured BWP (configured BWP) other than an initial BWP (initial BWP) covers a frequency domain resource of a to-be-measured SSB. Alternatively, in other words, for SSB-based intra-frequency (intra-frequency) measurement, a to-be-measured SSB is in an active BWP (active BWP), or intra-frequency measurement is performed when an active BWP is an initial BWP.

That is, in the foregoing special scenarios, the measurement configuration information delivered by the network device does not carry the measurement gap configuration information.

This application further provides a communication method. The communication method includes the following steps.

Step (1): A network device sends first measurement configuration information to a terminal device, where the first measurement configuration information indicates a measurement task.

For example, the network device sends a first RRC reconfiguration (RRCReconfiguration) message to the terminal device, where the first RRC reconfiguration message includes the first measurement configuration (measConfig) information.

The first measurement configuration (measConfig) information may carry measurement gap configuration (measGapConfig) information.

Alternatively, the first measurement configuration information may not carry measurement gap configuration information.

Step (2): The terminal device sends measurement gap requirement information indicating that a measurement gap is required to the network device, where the measurement gap requirement information further includes a measurement gap parameter.

For example, when determining that the measurement task requires the measurement gap, the terminal device sends the measurement gap requirement information to the network device.

For example, the terminal device sends an RRC reconfiguration complete message to the network device, where the RRC reconfiguration complete message carries the measurement gap requirement information.

Step (3): The network device sends second measurement configuration information to the terminal device, where the second measurement configuration information includes measurement gap configuration information corresponding to the measurement gap parameter.

For example, the network device sends a second RRC reconfiguration message to the terminal device, where the second RRC reconfiguration message includes the second measurement configuration information.

It may be understood as that in step (3), the network device configures new measurement gap configuration information for the terminal device based on the measurement gap parameter reported by the terminal device.

In this embodiment, after receiving the second measurement configuration information, the terminal device validates the measurement gap configuration information corresponding to the measurement gap parameter.

In an example, the terminal device originally has FR1 measurement gap configuration information. For example, the terminal device obtains the FR1 measurement gap configuration information through the first measurement configuration information, and then receives FR1 measurement gap configuration information through the second measurement configuration information. In this case, the terminal device may release the original FR1 measurement gap configuration information, and validate the subsequently newly configured FR1 measurement gap configuration information.

In another example, the terminal device originally has FR2 measurement gap configuration information. For example, the terminal device obtains the FR2 measurement gap configuration information through the first measurement configuration information, and then receives FR1 measurement gap configuration information through the second measurement configuration information. In this case, the terminal device may not release the original FR2 measurement gap configuration information.

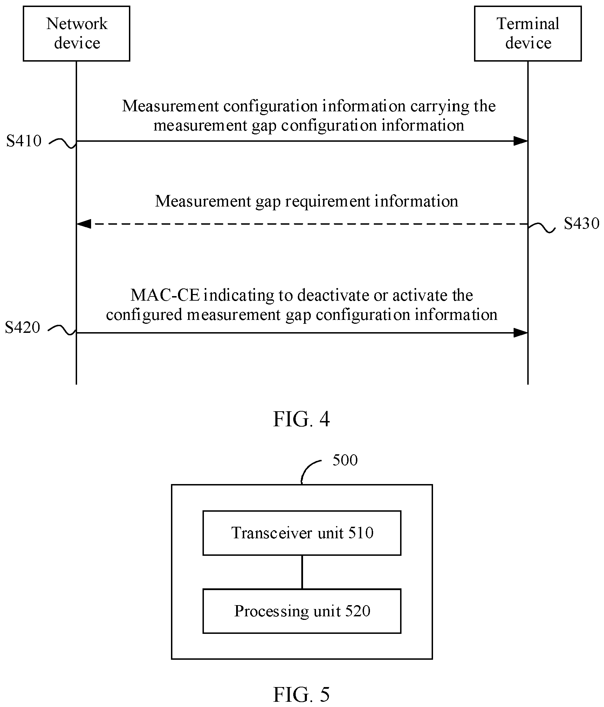

As shown in FIG. 4, this application further provides a communication method 400. The communication method 400 includes the following steps.

S410: A network device sends measurement configuration information to a terminal device, where the measurement configuration information carries measurement gap configuration information.

For example, the network device sends an RRC reconfiguration (RRCReconfiguration) message to the terminal device, where the RRC reconfiguration message includes the measurement configuration (measConfig) information, and the measurement configuration (measConfig) information carries the measurement gap configuration (measGapConfig) information.

Optionally, the measurement configuration information indicates a measurement task.

Alternatively, the measurement configuration information does not indicate a measurement task.

S420: The network device sends a medium access control-control element (medium access control-control element, MAC-CE) to the terminal device, where the MAC-CE indicates to deactivate configured measurement gap configuration information, or the MAC-CE indicates to activate configured measurement gap configuration information.

In this application, the network device deactivates or activates the measurement gap configuration information by using the MAC-CE. Compared with using RRC signaling, a transmission delay can be reduced.

In step S420, the network device may determine, in any one of the following manners, to send, to the terminal device, the MAC-CE that indicates to deactivate the configured measurement gap configuration information, or the MAC-CE that indicates to activate the configured measurement gap configuration information.

### Manner 1: Based on measurement gap requirement information reported by the terminal device

Optionally, in some embodiments, the method 400 further includes the following step.

S430: The terminal device sends the measurement gap requirement information to the network device, where the measurement gap requirement information indicates whether a measurement gap is required or not required.

In step S420, when the measurement gap requirement information indicates that the measurement gap is not required, the network device sends, to the terminal device, the MAC-CE that indicates to deactivate the configured measurement gap requirement information. Alternatively, when the measurement gap requirement information indicates that the measurement gap is required, the network device sends, to the terminal device, the MAC-CE that indicates to activate the configured measurement gap requirement information.

Optionally, the terminal device sends the measurement gap requirement information through an RRC reconfiguration complete message.

Optionally, the terminal device sends the measurement gap requirement information through other uplink signaling.

In this embodiment, the network device deactivates or activates the configured measurement gap configuration information by using the MAC-CE based on the measurement gap requirement information reported by the terminal device. In this way, flexibility of configuring the measurement gap can be improved.

### Manner 2: Based on a measurement gap capability of the terminal device

Optionally, in some embodiments, in step S420, the network device sends the MAC-CE to the terminal device based on the measurement gap capability of the terminal device.

When it is determined, based on the measurement gap capability of the terminal device, that the terminal device does not require the measurement gap, the MAC-CE that indicates to deactivate the configured measurement gap requirement information is sent to the terminal device; or when it is determined, based on the measurement gap capability of the terminal device, that the terminal device requires the measurement gap, the MAC-CE that indicates to activate the configured measurement gap requirement information is sent to the terminal device.

Optionally, the terminal device reports the measurement gap capability to the network device.

For example, the terminal device feeds back, in an RRC message, whether the measurement gap is required when the terminal device operates on each frequency and a to-be-measured reference signal is located at each frequency domain position.

### Manner 3: Based on a protocol

Optionally, in some embodiments, in step S420, the network device sends the MAC-CE to the terminal device based on the protocol.

In a scenario, specified in the protocol, in which the measurement gap is not required, the MAC-CE that indicates to deactivate the configured measurement gap requirement information is sent to the terminal device.

In a scenario, specified in the protocol, in which the measurement gap is required, the MAC-CE that indicates to activate the configured measurement gap requirement information is sent to the terminal device.

Based on the foregoing descriptions, in this application, the network device deactivates or activates the measurement gap configuration information by using the MAC-CE. Compared with using RRC signaling, a transmission delay can be reduced.

It should be further understood that various numbers such as first or second in this specification are used for differentiation only for ease of description and are not used to limit the scope of the embodiments of the present invention.

The embodiments described in this specification may be independent solutions, or may be combined based on internal logic. All these solutions fall within the protection scope of this application.

It may be understood that, in the foregoing method embodiments, the methods and the operations implemented by the terminal device may also be implemented by a component (for example, a chip or a circuit) that may be used in the terminal device, and the methods and the operations implemented by the location management device may also be implemented by a component (for example, a chip or a circuit) that may be used in the location management device.

The foregoing describes the method embodiments provided in the embodiments of this application, and the following describes apparatus embodiments provided in the embodiments of this application. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in the embodiments of this application from a perspective of interaction between devices. It may be understood that, to implement the foregoing functions, each device, such as a transmit end device or a receive end device, includes a corresponding hardware structure and/or software module for performing each function. A person skilled in the art may be aware that, with reference to the examples described in the embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, the transmit end device or the receive end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that in the embodiments of this application, division into modules is an example, and is merely logical function division. During actual implementation, there may be another division manner. An example in which each functional module is obtained through division based on a corresponding function is used below for description.

FIG. 5 is a schematic block diagram of a communication device 500 according to an embodiment of this application. The communication device 500 includes a transceiver unit 510 and a processing unit 520. The transceiver unit 510 may perform external communication, and the processing unit 510 is configured to process data. The transceiver unit 510 may also be referred to as a communication interface or a communication unit.

The communication device 500 may be configured to perform actions performed by the terminal device in the foregoing method embodiments, or perform actions performed by the network device in the foregoing method embodiments.

In an implementation, the communication device 500 may be configured to perform actions performed by the terminal device in the foregoing method 300. In this implementation, the communication device 500 may be referred to as a terminal device. The transceiver unit 510 is configured to perform operations related to receiving and sending on a terminal device side in the foregoing method 300, and the processing unit 520 is configured to perform operations related to processing on the terminal device in the foregoing method 300.

In this implementation, the transceiver unit 510 is configured to receive measurement configuration information from a network device, where the measurement configuration information indicates a measurement task. The processing unit 520 is configured to determine whether the measurement task requires a measurement gap. The transceiver unit 510 is further configured to: if the measurement task does not require the measurement gap, send first measurement gap requirement information indicating that the measurement gap is not required to the network device, where the first measurement gap requirement information is used to deactivate or release configured measurement gap configuration information; and/or if the measurement task requires the measurement gap, send second measurement gap requirement information indicating that the measurement gap is required to the network device, where the second measurement gap requirement information is used to activate or validate measurement gap configuration information corresponding to the second measurement gap requirement information.

In this application, a measurement gap configuration status is determined based on measurement gap requirement information reported by the terminal device. In this way, on the one hand, flexibility of configuring the measurement gap can be improved, and on the other hand, unnecessary communication interruption between the terminal device and a serving cell can be avoided, thereby improving communication efficiency. In addition, the measurement gap requirement information reported by the terminal device is directly used to activate or validate, or deactivate or release the measurement gap configuration information, so that the network device does not need to reconfigure or release the measurement gap through RRC signaling. In this way, signaling overheads can be reduced.

Optionally, in some embodiments, the transceiver unit 510 is configured to receive the measurement configuration information from the network device, where the measurement configuration information indicates the measurement task. The processing unit 520 is configured to determine whether the measurement task requires the measurement gap.

The transceiver unit 510 is further configured to: if the measurement task does not require the measurement gap, send the first measurement gap requirement information indicating that the measurement gap is not required to the network device, where the first measurement gap requirement information is used to deactivate or release the configured measurement gap configuration information; and/or if the measurement task requires the measurement gap, send the second measurement gap requirement information indicating that the measurement gap is required to the network device, where the second measurement gap requirement information is used to activate or validate the measurement gap configuration information corresponding to the second measurement gap requirement information.

Optionally, in some embodiments, the measurement configuration information includes first measurement gap configuration information. The transceiver unit 510 is configured to: if the measurement task does not require the measurement gap, send the first measurement gap requirement information to the network device, where the first measurement gap requirement information is used to deactivate or release the first measurement gap configuration information; and/or if the measurement task requires the measurement gap, send the second measurement gap requirement information to the network device, where the second measurement gap requirement information is used to activate or validate the first measurement gap configuration information.

Optionally, in some embodiments, the first measurement gap configuration information is validated by default. The transceiver unit 510 is configured to: if the measurement task does not require the measurement gap, send the first measurement gap requirement information to the network device, where the first measurement gap requirement information is used to deactivate or release the first measurement gap configuration information; or if the measurement task requires the measurement gap, skip sending measurement gap requirement information to the network device.

Optionally, in some embodiments, the first measurement gap configuration information is not validated by default. The transceiver unit 510 is configured to: if the measurement task requires the measurement gap, send the second measurement gap requirement information to the network device, where the second measurement gap requirement information is used to activate or validate the first measurement gap configuration information; or if the measurement task does not require the measurement gap, skip sending measurement gap requirement information to the network device.

Optionally, in some embodiments, the transceiver unit 510 is configured to: if the measurement task requires the measurement gap, send the second measurement gap requirement information to the network device, where the second measurement gap requirement information includes a measurement gap parameter, and the second measurement gap requirement information is used to validate the measurement gap configuration information corresponding to the measurement gap parameter.

Optionally, in some embodiments, the processing unit 520 is configured to: when a serving cell configuration changes, determine whether the measurement task requires the measurement gap.

In another implementation, the communication device 500 may be configured to perform actions performed by the network device in the foregoing method 300. In this implementation, the communication device 500 may be referred to as a network device. The transceiver unit 510 is configured to perform operations related to receiving and sending on a network device side in the foregoing method 300, and the processing unit 520 is configured to perform operations related to processing on the network device in the foregoing method 300.

In this implementation, the processing unit 520 is configured to determine measurement configuration information for a terminal device, where the measurement configuration information indicates a measurement task. The transceiver unit 510 is configured to: send the measurement configuration information to the terminal device; and when the measurement task does not require a measurement gap, receive, from the terminal device, first measurement gap requirement information indicating that the measurement gap is not required, where the first measurement gap requirement information is used to deactivate or release configured measurement gap configuration information; and/or when the measurement task requires a measurement gap, receive, from the terminal device, second measurement gap requirement information indicating that the measurement gap is required, where the second measurement gap requirement information is used to activate or validate measurement gap configuration information corresponding to the second measurement gap requirement information.

In this application, a measurement gap configuration status is determined based on measurement gap requirement information reported by the terminal device. In this way, on the one hand, flexibility of configuring the measurement gap can be improved, and on the other hand, unnecessary communication interruption between the terminal device and a serving cell can be avoided, thereby improving communication efficiency. In addition, the measurement gap requirement information reported by the terminal device is directly used to activate or validate, or deactivate or release the measurement gap configuration information, so that the network device does not need to reconfigure or release the measurement gap through RRC signaling. In this way, signaling overheads can be reduced.

Optionally, in some embodiments, the measurement configuration information includes first measurement gap configuration information. The transceiver unit 510 is configured to: when the measurement task does not require the measurement gap, receive the first measurement gap requirement information from the terminal device, where the first measurement gap requirement information is used to deactivate or release the first measurement gap configuration information; and/or when the measurement task requires the measurement gap, receive the second measurement gap requirement information from the terminal device, where the second measurement gap requirement information is used to activate or validate the first measurement gap configuration information.

Optionally, in some embodiments, the first measurement gap configuration information is validated by default. The transceiver unit 510 is configured to: when the measurement task does not require the measurement gap, receive the first measurement gap requirement information from the terminal device, where the first measurement gap requirement information is used to deactivate or release the first measurement gap configuration information; or when the measurement task requires the measurement gap, skip receiving measurement gap requirement information from the terminal device.

Optionally, in some embodiments, the first measurement gap configuration information is not validated by default. The transceiver unit 510 is configured to: when the measurement task requires the measurement gap, receive the second measurement gap requirement information from the terminal device, where the second measurement gap requirement information is used to activate or validate the first measurement gap configuration information; or when the measurement task does not require the measurement gap, skip receiving measurement gap requirement information from the terminal device.

Optionally, in some embodiments, the transceiver unit 510 is configured to receive the second measurement gap requirement information from the terminal device, where the second measurement gap requirement information includes a measurement gap parameter, and the second measurement gap requirement information is used to validate the measurement gap configuration information corresponding to the measurement gap parameter.

In still another implementation, the communication device 500 may be configured to perform actions performed by the network device in the foregoing method 400. In this implementation, the communication device 500 may be referred to as a network device. The transceiver unit 510 is configured to perform operations related to receiving and sending on a network device side in the foregoing method 400, and the processing unit 520 is configured to perform operations related to processing on the network device in the foregoing method 400.

In this implementation, the processing unit 520 is configured to allocate measurement configuration information to a terminal device, where the measurement configuration information carries measurement gap configuration information. The transceiver unit 510 is configured to: send the measurement configuration information to the terminal device, send a medium access control-control element (medium access control-control element, MAC-CE) to the terminal device, where the MAC-CE indicates to deactivate configured measurement gap configuration information, or the MAC-CE indicates to activate configured measurement gap configuration information.

In this application, the network device deactivates or activates the measurement gap configuration information by using the MAC-CE. Compared with using RRC signaling, a transmission delay can be reduced.

Optionally, the transceiver unit 510 is further configured to receive measurement gap requirement information from the terminal device, where the measurement gap requirement information indicates that a measurement gap is required or not required.

The transceiver unit 510 is configured to: when the measurement gap requirement information indicates that the measurement gap is not required, send, to the terminal device, a MAC-CE that indicates to deactivate the configured measurement gap requirement information; or when the measurement gap requirement information indicates that the measurement gap is required, send, to the terminal device, a MAC-CE that indicates to activate the configured measurement gap requirement information.

Optionally, the measurement gap requirement information sent by the terminal device is carried in an RRC reconfiguration complete message.

Optionally, the measurement gap requirement information sent by the terminal device is carried in other uplink signaling.

In this implementation, the network device deactivates or activates the configured measurement gap configuration information by using the MAC-CE based on the measurement gap requirement information reported by the terminal device. In this way, flexibility of configuring the measurement gap can be improved.

Optionally, the transceiver unit 510 is configured to send the MAC-CE to the terminal device based on a measurement gap capability of the terminal device.

The transceiver unit 510 is configured to: when it is determined, based on the measurement gap capability of the terminal device, that the terminal device does not require the measurement gap, send, to the terminal device, the MAC-CE that indicates to deactivate the configured measurement gap requirement information; or when it is determined, based on the measurement gap capability of the terminal device, that the terminal device requires the measurement gap, send, to the terminal device, the MAC-CE that indicates to activate the configured measurement gap requirement information.

Optionally, the transceiver unit 510 is configured to send the MAC-CE to the terminal device based on a protocol.

Optionally, the transceiver unit 510 is configured to send, to the terminal device in a scenario, specified in the protocol, in which the measurement gap is not required, the MAC-CE that indicates to deactivate the configured measurement gap requirement information; or send, to the terminal device in a scenario, specified in the protocol, in which the measurement gap is required, the MAC-CE that indicates to activate the configured measurement gap requirement information.

In yet another implementation, the communication device 500 may be configured to perform actions performed by the terminal device in the foregoing method 400. In this implementation, the communication device 500 may be referred to as a terminal device. The transceiver unit 510 is configured to perform operations related to receiving and sending on a terminal device side in the foregoing method 400, and the processing unit 520 is configured to perform operations related to processing on the terminal device in the foregoing method 400.

In this implementation, the transceiver unit 510 is configured to: receive measurement configuration information from a network device, where the measurement configuration information carries measurement gap configuration information; and receive a MAC-CE from the network device, where the MAC-CE indicates to deactivate configured measurement gap configuration information, or the MAC-CE indicates to activate configured measurement gap configuration information. The processing unit 520 is configured to determine a measurement gap configuration status based on the MAC-CE.

When the MAC-CE indicates to deactivate the configured measurement gap configuration information, the processing unit 520 deactivates the configured measurement gap configuration information. When the MAC-CE indicates to activate the configured measurement gap configuration information, the processing unit 520 activates the configured measurement gap configuration information.

In this application, the network device deactivates or activates the measurement gap configuration information by using the MAC-CE. Compared with using RRC signaling, a transmission delay can be reduced.

Optionally, the transceiver unit 510 is further configured to send measurement gap requirement information to the network device, where the measurement gap requirement information indicates that a measurement gap is required or not required.

For example, the measurement configuration information indicates a measurement task. The transceiver unit 510 is configured to: when it is determined that the measurement task does not require a measurement gap, send measurement gap requirement information indicating that the measurement gap is not required to the network device; or when it is determined that the measurement task requires a measurement gap, send measurement gap requirement information indicating that the measurement gap is required to the network device.

Optionally, the measurement gap requirement information sent by the terminal device is carried in an RRC reconfiguration complete message.

Optionally, the measurement gap requirement information sent by the terminal device is carried in other uplink signaling.

In this implementation, the network device may send the MAC-CE to the terminal device based on the measurement gap requirement information reported by the terminal device. When the measurement gap requirement information indicates that the measurement gap is not required, the MAC-CE that indicates to deactivate the configured measurement gap requirement information is sent to the terminal device. Alternatively, when the measurement gap requirement information indicates that the measurement gap is required, the MAC-CE that indicates to activate the configured measurement gap requirement information is sent to the terminal device.

In this implementation, the network device deactivates or activates the configured measurement gap configuration information by using the MAC-CE based on the measurement gap requirement information reported by the terminal device. In this way, flexibility of configuring the measurement gap can be improved.

It should be understood that the processing unit 520 in the foregoing embodiment may be implemented by a processor or a processor-related circuit, and the transceiver unit 510 may be implemented by a transceiver or a transceiver-related circuit.

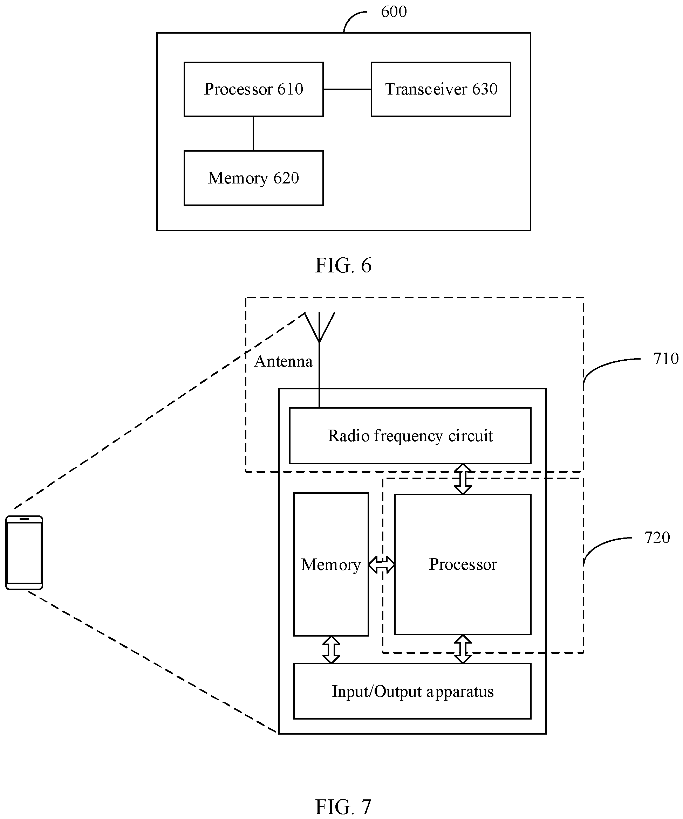

As shown in FIG. 6, an embodiment of this application further provides a communication device 600. The communication device 600 includes a processor 610, a memory 620, and a transceiver 630. The memory 620 stores a program. The processor 610 is configured to execute the program stored in the memory 620. Execution of the program stored in the memory 620 enables the processor 610 to perform steps related to processing in the foregoing method embodiments, and enables the processor 610 to control the transceiver 630 to perform steps related to receiving and sending in the foregoing method embodiments.

In an implementation, the communication device 600 is configured to perform actions performed by the terminal device in the foregoing method embodiments. In this case, execution of the program stored in the memory 620 enables the processor 610 to perform the processing steps on a terminal device side in the foregoing method embodiments. The transceiver 630 is configured to perform the receiving and sending steps on the terminal device side in the foregoing method embodiments. Optionally, execution of the program stored in the memory 620 enables the processor 610 to control the transceiver 630 to perform the receiving and sending steps on the terminal device side in the foregoing method embodiments.

In another implementation, the communication device 600 is configured to perform actions performed by the network device in the foregoing method embodiments. In this case, execution of the program stored in the memory 620 enables the processor 610 to perform the processing steps on a network device side in the foregoing method embodiments. The transceiver 630 is configured to perform the receiving and sending steps on the network device side in the foregoing method embodiments. Optionally, execution of the program stored in the memory 620 enables the processor 610 to control the transceiver 630 to perform the receiving and sending steps on the network device side in the foregoing method embodiments.

An embodiment of this application further provides a communication apparatus 700. The communication apparatus 700 may be a terminal device or a chip. The communication device 700 may be configured to perform actions performed by the terminal device in the foregoing method embodiments.

When the communication device 700 is a terminal device, FIG. 7 is a simplified schematic diagram of a structure of the terminal device. For ease of understanding and illustration, an example in which the terminal device is a mobile phone is used in FIG. 7. As shown in FIG. 7, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to send and receive the radio frequency signal in an electromagnetic wave form. The input/output apparatus, such as a touchscreen, a display screen, or a keyboard, is mainly configured to: receive data entered by a user and output data to the user. It should be noted that some types of terminal devices may have no input/output apparatus.

When data needs to be sent, after performing baseband processing on the to-be-sent data, the processor outputs a baseband signal to the radio frequency circuit. After performing radio frequency processing on the baseband signal, the radio frequency circuit sends a radio frequency signal to the outside in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 7, the terminal device includes a transceiver unit 710 and a processing unit 720. The transceiver unit 710 may also be referred to as a transceiver, a transceiver apparatus, or the like. The processing unit 720 may also be referred to as a processor, a processing board, a processing module, a processing apparatus, or the like. Optionally, a component for implementing a receiving function in the transceiver unit 710 may be considered as a receiving unit, and a component for implementing a sending function in the transceiver unit 710 may be considered as a sending unit. In other words, the transceiver unit 710 includes the receiving unit and the sending unit. The transceiver unit may also be sometimes referred to as a transceiver, a transceiver, a transceiver circuit, or the like. The receiving unit may also be sometimes referred to as a receiver, a receiver circuit, or the like. The sending unit may also be sometimes referred to as a transmitter, a transmitter, a transmitter circuit, or the like.

For example, in an implementation, the transceiver unit 710 is further configured to perform the receiving operation on a terminal device side in step S310 shown in FIG. 3, and the sending operation on the terminal device side in step S330, and/or the transceiver unit 710 is further configured to perform other receiving and sending steps on the terminal device side. The processing unit 720 is configured to perform step S320 shown in FIG. 3.

For another example, in an implementation, the transceiver unit 710 is further configured to perform the receiving operation on a terminal device side in steps S410 and S420 shown in FIG. 4, and the sending operation on the terminal device side in step S430, and/or the transceiver unit 710 is further configured to perform other receiving and sending steps on the terminal device side. The processing unit 720 is configured to perform the processing steps on the terminal device side in the embodiment in FIG. 4, for example, determine measurement gap requirement information for a measurement task.

It should be understood that FIG. 7 is merely an example instead of a limitation. The terminal device including the transceiver unit and the processing unit may not depend on the structure shown in FIG. 7.

When the communication device 700 is a chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a communication device 800. The communication device 800 may be a network device or a chip. The communication device 800 may be configured to perform actions performed by the network device in the foregoing method embodiments.

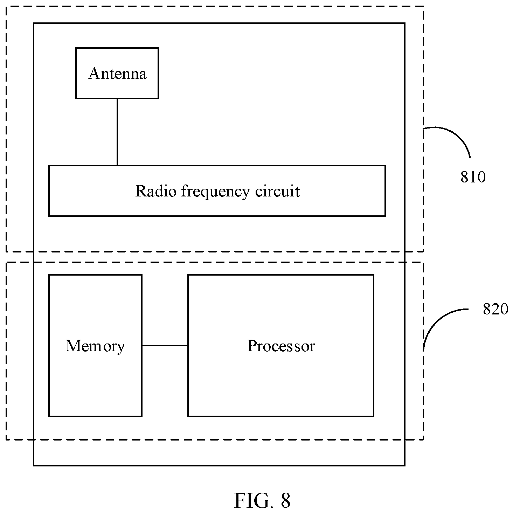

When the communication device 800 is a network device, for example, a base station, FIG. 8 is a simplified schematic diagram of a structure of the base station. The base station includes a part 810 and a part 820. The part 810 is mainly configured to: send and receive a radio frequency signal, and perform conversion between the radio frequency signal and a baseband signal. The part 820 is mainly configured to: perform baseband processing, control the base station, and the like. The part 810 may be usually referred to as a transceiver unit, a transceiver, a transceiver circuit, or the like. The part 820 is usually a control center of the base station, may be usually referred to as a processing unit, and is configured to control the base station to perform a processing operation on a network device side in the foregoing method embodiments.

The transceiver unit of the part 810 may also be referred to as a transceiver, a transceiver, or the like, and includes an antenna and a radio frequency unit. The radio frequency unit is mainly configured to perform radio frequency processing. Optionally, a component for implementing a receiving function in the part 810 may be considered as a receiving unit, and a component for implementing a sending function may be considered as a sending unit. In other words, the part 810 includes the receiving unit and the sending unit. The receiving unit may also be referred to as a receiver, a receiver, a receiver circuit, or the like. The sending unit may be referred to as a transmitter, a transmitter, a transmitter circuit, or the like.

The part 820 may include one or more boards, and each board may include one or more processors and one or more memories. The processor is configured to read and execute a program in the memory to implement a baseband processing function and control the base station. If there are a plurality of boards, the boards may be interconnected to enhance a processing capability. In an optional implementation, the plurality of boards may share one or more processors, or the plurality of boards may share one or more memories, or the plurality of boards may simultaneously share one or more processors.

For example, in an implementation, the part 810 is configured to perform the sending operation on the network device side in step S310 shown in FIG. 3, and the receiving operation on the network device side in step S330, and/or the part 810 is further configured to perform other receiving and sending steps on the network device side. The part 820 is configured to perform the processing steps on the network device side in the embodiment in FIG. 3.

For another example, in an implementation, the part 810 is further configured to perform the sending operation on the network device side in steps S410 and S420 shown in FIG. 4, and the receiving operation on the network device side in step S430, and/or the part 810 is further configured to perform other receiving and sending steps on the network device side. The part 820 is configured to perform the processing steps on the network device side in the embodiment in FIG. 4.

It should be understood that FIG. 8 is merely an example instead of a limitation. The network device including the transceiver unit and the processing unit may not depend on the structure shown in FIG. 8.

When the communication device 800 is a chip, the chip includes a transceiver unit and a processing unit. The transceiver unit may be an input/output circuit or a communication interface. The processing unit is a processor, a microprocessor, or an integrated circuit that is integrated on the chip.

An embodiment of this application further provides a computer-readable storage medium. The computer-readable storage medium stores a computer program. When the computer program is executed by a computer, the computer is enabled to implement the method on a terminal device side, or the method on a network device side in the foregoing method embodiments.

An embodiment of this application further provides a computer program product including instructions. When the instructions are executed by a computer, the computer is enabled to implement the method on a terminal device side, or the method on a network device side in the foregoing method embodiments.

For explanations and beneficial effects of related content of any of the communication apparatuses provided above, refer to the corresponding method embodiment provided above. Details are not described herein again.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). An operating system may be any one or more of computer operating systems implementing service processing through a process (process), for example, a Linux operating system, a Unix operating system, an Android operating system, an iOS operating system, and a Windows operating system. The application layer includes applications such as a browser, an address book, word processing software, and instant communication software. In addition, a specific structure of an execution body of a method provided in the embodiments of this application is not specifically limited in the embodiments of this application provided that a program that records code for the method provided in the embodiments of this application can be run to perform communication according to the method provided in the embodiments of this application. For example, the execution body of the method provided in the embodiments of this application may be the terminal device, the network device, or a functional module that is in the terminal device or the network device and that can invoke and execute the program.

In addition, aspects or features of this application may be implemented as a method, an apparatus or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) is integrated into the processor.

It should be noted that the memory described in this specification is intended to include but not limited to these memories and any memory of another proper type.

A person of ordinary skill in the art may be aware that, with reference to the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving measurement configuration information from a network device, wherein the measurement configuration information indicates a measurement task;
determining whether the measurement task requires a measurement gap; and
if the measurement task does not require the measurement gap, sending first measurement gap requirement information indicating that the measurement gap is not required to the network device, wherein the first measurement gap requirement information is used to deactivate or release configured measurement gap configuration information; if the measurement task requires the measurement gap, sending second measurement gap requirement information indicating that the measurement gap is required to the network device, wherein the second measurement gap requirement information is used to activate or validate measurement gap configuration information corresponding to the second measurement gap requirement information.

2. The communication method according to claim 1, wherein the measurement configuration information comprises first measurement gap configuration information; and
if the measurement task does not require the measurement gap, the first measurement gap requirement information is sent to the network device, wherein the first measurement gap requirement information is used to deactivate or release the first measurement gap configuration information; and/or
if the measurement task requires the measurement gap, the second measurement gap requirement information is sent to the network device, wherein the second measurement gap requirement information is used to activate or validate the first measurement gap configuration information.

3. The communication method according to claim 2, wherein the first measurement gap configuration information is validated by default; and
if the measurement task does not require the measurement gap, the first measurement gap requirement information is sent to the network device, wherein the first measurement gap requirement information is used to deactivate or release the first measurement gap configuration information; or
if the measurement task requires the measurement gap, measurement gap requirement information is not sent to the network device.

4. The communication method according to claim 2, wherein the first measurement gap configuration information is not validated by default; and
if the measurement task requires the measurement gap, the second measurement gap requirement information is sent to the network device, wherein the second measurement gap requirement information is used to activate or validate the first measurement gap configuration information; or
if the measurement task does not require the measurement gap, measurement gap requirement information is not sent to the network device.

5. The communication method according to any one of claims 1 to 4, wherein if the measurement task requires the measurement gap, the second measurement gap requirement information is sent to the network device, wherein the second measurement gap requirement information comprises a measurement gap parameter, and the second measurement gap requirement information is used to validate the measurement gap configuration information corresponding to the measurement gap parameter.

6. The communication method according to any one of claims 1 to 5, wherein the determining whether the measurement task requires a measurement gap comprises:
when a serving cell configuration changes, determining whether the measurement task requires the measurement gap.

7. A communication method, comprising:
sending measurement configuration information to a terminal device, wherein the measurement configuration information indicates a measurement task; and
when the measurement task does not require a measurement gap, receiving, from the terminal device, first measurement gap requirement information indicating that the measurement gap is not required, wherein the first measurement gap requirement information is used to deactivate or release configured measurement gap configuration information; and/or
when the measurement task requires a measurement gap, receiving, from the terminal device, second measurement gap requirement information indicating that the measurement gap is required, wherein the second measurement gap requirement information is used to activate or validate measurement gap configuration information corresponding to the second measurement gap requirement information.

8. The communication method according to claim 7, wherein the measurement configuration information comprises first measurement gap configuration information; and
when the measurement task does not require the measurement gap, the first measurement gap requirement information is received from the terminal device, wherein the first measurement gap requirement information is used to deactivate or release the first measurement gap configuration information; and/or
when the measurement task requires the measurement gap, the second measurement gap requirement information is received from the terminal device, wherein the second measurement gap requirement information is used to activate or validate the first measurement gap configuration information.

9. The communication method according to claim 8, wherein the first measurement gap configuration information is validated by default; and
when the measurement task does not require the measurement gap, the first measurement gap requirement information is received from the terminal device, wherein the first measurement gap requirement information is used to deactivate or release the first measurement gap configuration information; or
when the measurement task requires the measurement gap, measurement gap requirement information is not received from the terminal device.

10. The communication method according to claim 8, wherein the first measurement gap configuration information is not validated by default; and
when the measurement task requires the measurement gap, the second measurement gap requirement information is received from the terminal device, wherein the second measurement gap requirement information is used to activate or validate the first measurement gap configuration information; or
when the measurement task does not require the measurement gap, measurement gap requirement information is not received from the terminal device.

11. The communication method according to any one of claims 7 to 10, wherein the second measurement gap requirement information is received from the terminal device, wherein the second measurement gap requirement information comprises a measurement gap parameter, and the second measurement gap requirement information is used to validate the measurement gap configuration information corresponding to the measurement gap parameter.

12. A terminal device, comprising:
a transceiver unit, configured to receive measurement configuration information from a network device, wherein the measurement configuration information indicates a measurement task; and
a processing unit, configured to determine whether the measurement task requires a measurement gap, wherein
the transceiver unit is further configured to:
if the measurement task does not require the measurement gap, send first measurement gap requirement information indicating that the measurement gap is not required to the network device, wherein the first measurement gap requirement information is used to deactivate or release configured measurement gap configuration information; and/or
if the measurement task requires the measurement gap, send second measurement gap requirement information indicating that the measurement gap is required to the network device, wherein the second measurement gap requirement information is used to activate or validate measurement gap configuration information corresponding to the second measurement gap requirement information.

13. The terminal device according to claim 12, wherein the measurement configuration information comprises first measurement gap configuration information; and
the transceiver unit is configured to:
if the measurement task does not require the measurement gap, send the first measurement gap requirement information to the network device, wherein the first measurement gap requirement information is used to deactivate or release the first measurement gap configuration information; and/or
if the measurement task requires the measurement gap, send the second measurement gap requirement information to the network device, wherein the second measurement gap requirement information is used to activate or validate the first measurement gap configuration information.

14. The terminal device according to claim 13, wherein the first measurement gap configuration information is validated by default; and
the transceiver unit is configured to:
if the measurement task does not require the measurement gap, send the first measurement gap requirement information to the network device, wherein the first measurement gap requirement information is used to deactivate or release the first measurement gap configuration information; or
if the measurement task requires the measurement gap, skip sending measurement gap requirement information to the network device.

15. The terminal device according to claim 13, wherein the first measurement gap configuration information is not validated by default; and
the transceiver unit is configured to:
if the measurement task requires the measurement gap, send the second measurement gap requirement information to the network device, wherein the second measurement gap requirement information is used to activate or validate the first measurement gap configuration information; or
if the measurement task does not require the measurement gap, skip sending measurement gap requirement information to the network device.

16. The terminal device according to any one of claims 12 to 15, wherein the transceiver unit is configured to: if the measurement task requires the measurement gap, send the second measurement gap requirement information to the network device, wherein the second measurement gap requirement information comprises a measurement gap parameter, and the second measurement gap requirement information is used to validate the measurement gap configuration information corresponding to the measurement gap parameter.

17. The terminal device according to any one of claims 12 to 16, wherein the processing unit is configured to:
when a serving cell configuration changes, determine whether the measurement task requires the measurement gap.

18. A network device, comprising:
a processing unit, configured to determine measurement configuration information for a terminal device, wherein the measurement configuration information indicates a measurement task; and
a transceiver unit, configured to:
send the measurement configuration information to the terminal device; and
when the measurement task does not require a measurement gap, receive, from the terminal device, first measurement gap requirement information indicating that the measurement gap is not required, wherein the first measurement gap requirement information is used to deactivate or release configured measurement gap configuration information; and/or
when the measurement task requires a measurement gap, receive, from the terminal device, second measurement gap requirement information indicating that the measurement gap is required, wherein the second measurement gap requirement information is used to activate or validate measurement gap configuration information corresponding to the second measurement gap requirement information.

19. The network device according to claim 18, wherein the measurement configuration information comprises first measurement gap configuration information; and
the transceiver unit is configured to:
when the measurement task does not require the measurement gap, receive the first measurement gap requirement information from the terminal device, wherein the first measurement gap requirement information is used to deactivate or release the first measurement gap configuration information; and/or
when the measurement task requires the measurement gap, receive the second measurement gap requirement information from the terminal device, wherein the second measurement gap requirement information is used to activate or validate the first measurement gap configuration information.

20. The network device according to claim 19, wherein the first measurement gap configuration information is validated by default; and
the transceiver unit is configured to:
when the measurement task does not require the measurement gap, receive the first measurement gap requirement information from the terminal device, wherein the first measurement gap requirement information is used to deactivate or release the first measurement gap configuration information; or
when the measurement task requires the measurement gap, skip receiving measurement gap requirement information from the terminal device.

21. The network device according to claim 19, wherein the first measurement gap configuration information is not validated by default; and
the transceiver unit is configured to:
when the measurement task requires the measurement gap, receive the second measurement gap requirement information from the terminal device, wherein the second measurement gap requirement information is used to activate or validate the first measurement gap configuration information; or
when the measurement task does not require the measurement gap, skip receiving measurement gap requirement information from the terminal device.

22. The network device according to any one of claims 18 to 21, wherein the transceiver unit is configured to receive the second measurement gap requirement information from the terminal device, wherein the second measurement gap requirement information comprises a measurement gap parameter, and the second measurement gap requirement information is used to validate the measurement gap configuration information corresponding to the measurement gap parameter.

23. A communication apparatus, wherein the communication apparatus comprises a memory and a processor, the memory is configured to store instructions, the processor is configured to execute the instructions stored in the memory, and execution of the instructions stored in the memory enables the processor to perform the method according to any one of claims 1 to 6 or the method according to any one of claims 7 to 11.

24. A computer-readable storage medium, wherein the computer-readable storage medium stores a computer program, and when the computer program is executed by a computer, the computer is enabled to implement the method according to any one of claims 1 to 6 or the method according to any one of claims 7 to 11.
